# EUROPEAN PATENT APPLICATION

(11) **EP 3 275 806 A1**
(43) Date of publication of application: **31.01.2018**
(21) Application number: 16181951.1
(22) Date of filing: 29.07.2016
(51) Int. Cl.: B65D 85/808, A23P 10/35, A23P 10/40, A23L 23/10

(54) **A CONCENTRATED FOOD PRODUCT AND METHOD FOR PREPARING SAME**

(71) Applicant: Kerry Luxembourg S.a.r.l., 1820 Luxembourg (LU)
(72) Inventor: DOVEY, Martin Charles, 3610 KwaZulu-Natal (ZA); PONQUETT, Ryan Tyson, 3610 KwaZulu-Natal (ZA); LUBBE, Francois Jacques, 3610 KwaZulu-Natal (ZA)
(74) Representative: FRKelly

(57) **Abstract**

The present invention relates to methods for preparing a powdered food product and powdered food products obtainable by the methods and provided with a porous membrane. There are also disclosed methods for preparing a food stock and food stocks obtainable by the methods, as well as methods for preparing a food broth, food broths obtainable by the methods, and a device for preparing such food broths. The methods and products obtainable by the methods find utility in the culinary field of preparing stocks and broths.

## Description

### Field of the Invention

The present invention relates to methods for preparing a powdered food product and powdered food products obtainable by the methods. There are also disclosed methods for preparing a food stock and food stocks obtainable by the methods, as well as methods for preparing a food broth, food broths obtainable by the methods, and a device for preparing such food broths.

### Background to the Invention

Broth is a liquid food preparation, typically comprising water, in which bones, meat, fish, cereal grains, or vegetables have been infused. Broth is used as a basis for other edible liquids such as soup, gravy, or sauce. Meat broths are traditionally made using aqueous extractions of meat bones, wherein bones are added to water, with or without the addition of other culinary ingredients (such as vegetables, salts, herbs, spices, etc.), which is then brought to the boil and simmered for a number of hours. The bones are traditionally removed at this point and the broth is reduced in volume over a period of time.

The method of broth preparation is well known in the culinary field but suffers from a number of drawbacks which are inherent to the method. These drawbacks include (but are not limited to) microbiological stability, yield, and consistency. Broths prepared by the traditional method are normally used immediately, or must be frozen if an extended shelf-life is required. Moreover, the yield of broth is usually poor, with 1 kg of meat bones normally yielding 2.5-3.0 litres of broth. The method of broth preparation can also be complicated work involving heat adjustment, scum removal, filtration, clarifying the liquid, and boiling it down to the proper concentration. Depending on the experience of the cook, the differing levels of technical skill has a significant impact on product quality, making it difficult to maintain product uniformity. The principle drawback is the loss of flavour due to the long heating times used to remove water after the extraction process is complete, and which can be predominant when the process is carried out on an industrial scale.

To overcome these drawbacks, commercially prepared liquid broths are available, typically for chicken broth, beef broth, and vegetable broth. However, commercially prepared liquid broths must still be used immediately, or must be frozen if an extended shelf-life is required.

Dehydrated meat stock, in the form of tablets, called a bouillon or stock cube, have been industrially produced and commercialized since the early 1900s to allow cooks to save time in the preparation of broths. A bouillon or stock cube is a mixture of broth (most often dried) with salt, vegetable fat, and other ingredients such as herbs, spices, yeasts, etc; and which has an extended shelf life. These products, however, generally require additional flavours to enhance the overall flavour of the product. Closely related to stock cubes is a specific-hydrocolloid based product, which is a mixture of liquid stock, a specific hydrocolloid such as pectin, and traditional culinary ingredients. However, these products require a high level of salt to ensure microbiological stability and most often contain flavours to enhance overall acceptability of the products.

### Summary of the Invention

According to a first aspect of the present invention there is provided a method for preparing a powdered food product, the method comprising the steps of:
(a) cooking a food source;
(b) dehydrating the cooked food source; and
(c) reducing the particle size of the dehydrated food source.

According to a second aspect of the present invention there is provided a powdered food product obtainable by a method comprising the steps of: cooking a food source; dehydrating the cooked food source; and reducing the particle size of the dehydrated food source.

Optionally, the powdered food product is obtained by a method comprising the steps of: cooking a food source; dehydrating the cooked food source; and reducing the particle size of the dehydrated food source.

Optionally, the cooking step comprises heating the food source.

Optionally, the cooking step comprises baking, roasting, frying, grilling, barbecuing, smoking, boiling, steaming, braising, or any combination each thereof.

Optionally, the cooking step comprises roasting the food source.

Optionally, the cooking step comprises heating the food source to at least 150°C. Further optionally the cooking step comprises heating the food source to at least 160°C, optionally at least 170°C, optionally at least 180°C, optionally at least 190°C, optionally at least 200°C, optionally at least 210°C, optionally at least 220°C, optionally at least 230°C.

Optionally or additionally, the cooking step comprises heating the food source for at least 1 minute per kg weight of the food source. Further optionally or additionally, the cooking step comprises heating the food source for at least 5 minutes, optionally at least 10 minutes, optionally at least 15 minutes, optionally at least 20 minutes, optionally at least 25 minutes, optionally at least 30 minutes, optionally at least 40 minutes, optionally at least 50 minutes, optionally at least 60 minutes, per kg weight of the food source.

Optionally, the food source is an animal source (meat). Further optionally, the food source is a meat source.

Optionally or additionally, the food is a plant source (fruit or vegetable). Further optionally, the food is a vegetable source. Still further optionally, the food is a fruit source.

Optionally, the food source is a meat source, fruit source, vegetable source, or any combination each thereof.

Optionally, the meat source is selected from alpaca meat, banteng meat, bison meat, camel meat, beef, veal, venison, gayal meat, horse meat, pork, poultry meat, rabbit meat, deer meat, mutton, lamb, goat, fish, crustacean, and any combinations each thereof.

Optionally, the meat source comprises meat and bones. Further optionally, the meat source comprises carcass.

Optionally, the meat source is selected from alpaca carcass, banteng carcass, bison carcass, camel carcass, beef carcass, veal carcass, venison carcass, gayal carcass, horse carcass, pork carcass, poultry carcass, rabbit carcass, deer carcass, mutton carcass, lamb carcass, goat carcass, fish carcass, and any combinations each thereof.

Optionally, the meat source comprises poultry meat. Further optionally, the meat source comprises poultry meat and bones. Still further optionally, the meat source comprises poultry carcass.

Optionally, the meat source comprises meat from a domesticated bird or poultry selected from chicken, quail, turkey, goose, duck, guinea fowl, squab, and any combinations each thereof. Further optionally, the meat source comprises meat and bones from a domesticated bird or poultry selected from chicken, quail, turkey, goose, duck, guinea fowl, squab, and any combinations each thereof. Still further optionally, the meat source comprises the carcass of a domesticated bird or poultry selected from chicken, quail, turkey, goose, duck, guinea fowl, squab, and any combinations each thereof.

Optionally or additionally, the food source is a vegetable source.

Optionally or additionally, the vegetable source comprises root and/or tuberous vegetables.

Further optionally, the vegetable source comprises ahipa, arracacha, bamboo shoot, beetroot, burdock, broadleaf arrowhead, camas, cassava, chinese artichoke, daikon, earthnut pea, elephant foot yam, ensete, galangal, ginger, hamburg parsley, horseradish, jerusalem artichoke, parsnip, pignut, potato, prairie turnip, radish, rutabaga, salsify, scorzonera, skirret, swede, sweet potato, taro, ti, tigernut, turmeric, turnip, ulluco, wasabi, water caltrop, water chestnut, yacón, yam, or any combination each thereof.

Optionally or additionally, the vegetable source comprises bulb and/or stem vegetables.

Further optionally or additionally, the vegetable source comprises asparagus, cardoon, celeriac, celery, chives, elephant garlic, florence fennel, garlic, garlic chives, kohlrabi, kurrat, lemongrass, leek, lotus root, nopal, onion, pearl onion, potato onion, prussian asparagus, spring onion, scallion, shallot, tree onion, welsh onion, wild leek, or any combination each thereof.

Optionally or additionally, the vegetable source comprises flowers and/or flower buds.

Further optionally or additionally, the vegetable source comprises artichoke, broccoli, broccolini flowers, capers, cauliflower, daylily, courgette flowers, squash blossoms, or any combination each thereof.

Optionally or additionally, the vegetable source comprises podded vegetables.

Further optionally or additionally, the vegetable source comprises american groundnut, azuki bean, black-eyed pea, chickpea, common bean, drumstick, dolichos bean, fava bean, garbanzo, green bean, french bean, guar, horse gram, indian pea, lentil, lima bean, moth bean, mung bean, okra, pea, peanut, pigeon pea, ricebean, runner bean, snap pea, sugarsnap, mangetout, snow pea, soybean, tarwi, tarhui, chocho, tepary bean, urad bean, velvet bean, winged bean, yardlong bean, or any combination each thereof.

Optionally or additionally, the food source is a fruit source.

Optionally, the fruit source comprises avocado, bell pepper, bitter melon, bitter gourd, chayote, cucumber, ivy gourd, eggplant, aubergine, brinjal, luffa, olive fruit, pumpkin, squash, sweet pepper, tinda, tomatillo, tomato, vanilla, west indian gherkin, winter melon, zucchini, courgette, marrow, pineapple, mango, or any combination each thereof.

Optionally, the food source further comprises a cereal source.

Optionally, the cereal source is selected from corn (maize), wheat, rice, barley, sorghum, millet, oats, triticale, buckwheat, fonio, quinoa, or any combination each thereof.

Optionally, the dehydrating step comprises dehydrating the food source to a moisture content of less than 25% (relative dry weight of the cooked food source). Further optionally, the dehydrating step comprises dehydrating the food source to a moisture content of less than 20%, optionally less than 15%, optionally less than 10%, optionally less than 5% (relative dry weight of the cooked food source).

Optionally or additionally, the dehydrating step comprises dehydrating the food source to a water activity (a_{w}) of less than 0.9, optionally less than 0.8, optionally less than 0.7, optionally less than 0.6, optionally less than 0.5, optionally less than 0.4; optionally at room temperature, optionally at a temperature of 15°C to 25°C.

Optionally, the cooked food source has a moisture content of less than 25% (relative dry weight of the cooked food source). Further optionally, the cooked food source has a moisture content of less than 20%, optionally less than 15%, optionally less than 10%, optionally less than 5% (relative dry weight of the cooked food source).

Optionally or additionally, the cooked food source has a water activity (a_{w}) of less than 0.9, optionally less than 0.8, optionally less than 0.7, optionally less than 0.6, optionally less than 0.5, optionally less than 0.4; optionally at room temperature, optionally at a temperature of 15°C to 25°C.

Optionally, the powdered food product has a moisture content of less than 25% (relative dry weight of the cooked food source). Further optionally, the powdered food product has a moisture content of less than 20%, optionally less than 15%, optionally less than 10%, optionally less than 5% (relative dry weight of the cooked food source).

Optionally or additionally, the powdered food product has a water activity (a_{w}) of less than 0.9, optionally less than 0.8, optionally less than 0.7, optionally less than 0.6, optionally less than 0.5, optionally less than 0.4; optionally at room temperature, optionally at a temperature of 15°C to 25°C.

Optionally or additionally, the reducing step comprises reducing the particle size of the dehydrated food source to a particle size of less than 10mm. Further optionally, the reducing step comprises reducing the particle size of the dehydrated food source to a particle size of less than 9mm, optionally less than 8mm, optionally less than 7mm, optionally less than 6mm, optionally less than 5mm, optionally less than 4mm, optionally less than 3mm, optionally less than 2mm, optionally less than 1mm.

Optionally or additionally, the powdered food product has a particle size of less than 10mm. Further optionally, the powdered food product has a particle size of less than 9mm, optionally less than 8mm, optionally less than 7mm, optionally less than 6mm, optionally less than 5mm, optionally less than 4mm, optionally less than 3mm, optionally less than 2mm, optionally less than 1 mm.

Optionally, the method comprises the additional step of reducing the particle size of the cooked food source.

Optionally, the method comprises the additional step of reducing the particle size of the cooked food source prior to the dehydrating step.

Optionally, the additional step of reducing the particle size of the cooked food source comprises grinding, crushing, cutting, mincing or any combination each thereof.

Optionally, the additional step of reducing the particle size of the cooked food source comprises reducing the particle size of the cooked food source to less than 10 mm. Further optionally, the milling step comprises reducing the particle size of the cooked food source to less than 9 mm, optionally less than 8 mm, optionally less than 7 mm, optionally less than 6 mm, optionally less than 5 mm, optionally less than 4 mm, optionally less than 3 mm, optionally less than 2 mm.

Optionally, the method comprises the steps of
(a) cooking a food source;
(b) reducing the particle size of the cooked food source;
(c) dehydrating the cooked food source; and
(d) reducing the particle size of the dehydrated food source.

Optionally, the method further comprises the step of separating the meat from the cooked food source.

Optionally, the method comprises the steps of
(a) cooking a food source;
(b) separating the meat from the cooked food source;
(c) dehydrating the cooked meat; and
(d) reducing the particle size of the dehydrated meat.

Further optionally, the method comprises the steps of
(a) cooking a food source;
(b) separating the meat from the cooked food source;
(c) reducing the particle size of the cooked meat;
(d) dehydrating the cooked meat; and
(e) reducing the particle size of the dehydrated meat.

Further optionally, the method further comprises the step of separating the bones from the cooked food source.

Optionally, the method comprises the steps of
(a) cooking a food source;
(b) separating the bones from the cooked food source;
(c) dehydrating the cooked bones; and
(d) reducing the particle size of the dehydrated bones.

Optionally, the method comprises the steps of
(a) cooking a food source;
(b) separating the bones from the cooked food source;
(c) reducing the particle size of the cooked bones;
(d) dehydrating the cooked bones; and
(e) reducing the particle size of the dehydrated bones.

Optionally, the method comprises the additional step of further cooking the cooked food source, the cooked meat, or the cooked bones, prior to the dehydrating step.

Optionally, the method comprises the steps of
(a) cooking a food source;
(b) reducing the particle size of the cooked food source;
(c) further cooking a food source;
(d) dehydrating the cooked food source; and
(e) reducing the particle size of the dehydrated food source.

Optionally, the method comprises the steps of
(a) cooking a food source;
(b) separating the meat from the cooked food source;
(c) further cooking the cooked meat;
(d) dehydrating the cooked meat; and
(e) reducing the particle size of the dehydrated meat.

Further optionally, the method comprises the steps of
(a) cooking a food source;
(b) separating the meat from the cooked food source;
(c) reducing the particle size of the cooked meat;
(d) further cooking the milled cooked meat;
(e) dehydrating the cooked meat; and
(f) reducing the particle size of the dehydrated meat.

Optionally, the method comprises the steps of
(a) cooking a food source;
(b) separating the bones from the cooked food source;
(c) further cooking the cooked bones;
(d) dehydrating the cooked bones; and
(e) reducing the particle size of the dehydrated bones.

Optionally, the method comprises the steps of
(a) cooking a food source;
(b) separating the bones from the cooked food source;
(c) reducing the particle size of the cooked bones;
(d) further cooking the milled cooked bones;
(e) dehydrating the cooked bones; and
(f) reducing the particle size of the dehydrated bones.

Optionally, the further cooking step comprises heating the food source.

Optionally, the further cooking step comprises baking, roasting, frying, grilling, barbecuing, smoking, boiling, steaming, braising, or any combination each thereof.

Optionally, the further cooking step comprises roasting the food source.

Optionally, the further cooking step comprises heating the food source to at least 120°C. Further optionally the further cooking step comprises heating the food source to at least 130°C, optionally at least 140°C, optionally at least 150°C, optionally at least 160°C, optionally at least 170°C, optionally at least 180°C, optionally at least 190°C, optionally at least 200°C, optionally at least 210°C, optionally at least 220°C.

Optionally or additionally, the further cooking step comprises heating the food source for at least 1 minute per kg weight of the food source. Further optionally or additionally, the further cooking step comprises heating the food source for at least 5 minutes, optionally at least 10 minutes, optionally at least 15 minutes, optionally at least 20 minutes, optionally at least 25 minutes, optionally at least 30 minutes, optionally at least 40 minutes, optionally at least 50 minutes, optionally at least 60 minutes, per kg weight of the food source.

Optionally, the method further comprises adding seasonings and/or flavourings.

Optionally, the method further comprises adding saline seasonings, acid seasonings, hot seasonings, saccharine seasonings, or any combination each thereof.

Optionally, the method further comprises adding seasonings selected from salt, spiced salt, saltpeter. plain vinegar (sodium acetate), verjuice, lemon and/or orange juices, peppercorns, ground or coarsely chopped pepper, mignonette pepper, paprika, curry, cayenne, mixed pepper spices, sugar, honey, culinary herbs, or any combination each thereof.

Optionally or additionally, the method further comprises adding pungents, hot condiments, fatty substances, or any combination each thereof.

Optionally, the method further comprises adding seasonings selected from onions, shallots, garlic, chives, horseradish, mustard, gherkins, capers, wines, animal fats, butter, vegetable greases, edible oils and/or margarine, or any combination each thereof.

Optionally or additionally, the method further comprises adding additive ingredients.

Optionally, the method further comprises adding additive ingredients selected from acids (such as vinegar, citric acid, tartaric acid, malic acid, fumaric acid, and/or lactic acid), preservatives, antioxidants, acidity regulators, anticaking agents, antifoaming agents, bulking agents (such as starch), food colouring, colour retention agents, emulsifiers, flavours, flavour enhancers, flour treatment agents , glazing agents, humectants, tracer gas, stabilizers, thickeners, gelling agents (such as agar and/or pectin), sweeteners, or any combination each thereof.

Optionally, either or both of the adding steps are conducted prior to the cooking step.

Optionally or additionally either or both of the adding steps are conducted prior to the dehydrating step.

Optionally or additionally either or both of the adding steps are conducted prior to the further cooking step.

According to a third aspect of the present invention there is provided a method for preparing a food stock, the method comprising the steps of
(a) providing a powdered food product; and
(b) adding fat to the powdered food product.

Optionally, the method comprises the steps of
(a) cooking a food source;
(b) dehydrating the cooked food source;
(c) reducing the particle size of the dehydrated food source; and
(d) adding fat to the powdered food product.

Optionally, the powdered food product is obtainable by a method comprising the steps of: cooking a food source; dehydrating the cooked food source; and reducing the particle size of the dehydrated food source.

Optionally, the powdered food product is obtained by a method comprising the steps of: cooking a food source; dehydrating the cooked food source; and reducing the particle size of the dehydrated food source.

Optionally, the powdered food product is obtainable by a method according to a first aspect of the present invention.

Optionally, the powdered food product is obtained by a method according to a first aspect of the present invention.

According to a fourth aspect of the present invention there is provided a food stock obtainable by a method comprising providing a powdered food product; and adding fat to the powdered food product.

Optionally, the food stock is obtained by a method comprising providing a powdered food product; and adding fat to the powdered food product.

Optionally, the fat is an oil, fat, lipid, or any combination each thereof.

Optionally, the fat is a plant fat.

Optionally, the fat is a plant oil. Further optionally, the fat is a plant oil selected from coconut oil, corn oil, cottonseed oil, olive oil, palm oil, peanut oil, ground nut oil, rapeseed oil, canola oil, safflower oil, sesame oil, soybean oil, sunflower oil, almond oil, beech nut oil, brazil nut oil, cashew oil, hazelnut oil, macadamia oil, mongongo nut oil, manketti oil, pecan oil, pine nut oil, pistachio oil, walnut oil, or any combination each thereof.

Optionally or additionally, the fat is an animal fat/oil.

Optionally, the fat is an animal fat/oil.

Further optionally, the fat is an animal fat/oil selected from alpaca fat/oil, banteng fat/oil, bison fat/oil, camel fat/oil, beef fat/oil, veal fat/oil, venison fat/oil, gayal fat/oil, horse fat/oil, pork fat/oil, poultry fat/oil, rabbit fat/oil, deer fat/oil, mutton fat/oil, lamb fat/oil, goat fat/oil, fish fat/oil, and any combinations each thereof.

Optionally or additionally, the fat is an animal fat/oil selected from chicken fat/oil, quail fat/oil, turkey fat/oil, goose fat/oil, duck fat/oil, guinea fowl fat/oil, squab fat/oil, and any combinations each thereof.

The animal fat/oil can be rendered or not rendered. Optionally, the animal fat/oil is rendered.

Optionally, the fat is added in an amount of at least 10% (w/w) of the powdered food product. Further optionally, the fat is added in an amount of at least 20%, optionally at least 30%, optionally at least 40%, optionally at least 50%, optionally at least 60%, optionally at least 70%, optionally at least 80%, optionally at least 90%, optionally at least 100% (w/w) of the powdered food product.

Alternatively, the fat is added in an amount of at least 100% (w/w) of the powdered food product. Further optionally, the fat is added in an amount of at least 90%, optionally at least 80%, optionally at least 70%, optionally at least 60%, optionally at least 50%, optionally at least 40%, optionally at least 30%, optionally at least 20%, optionally at least 10% (w/w) of the powdered food product.

Optionally, the method comprises the additional step of milling the powdered food product and added fat.

Optionally, the milling step comprises grinding, crushing, cutting, mincing or any combination each thereof.

Optionally, the milling step comprises reducing the particle size of the powdered food product and added fat.

Optionally or additionally, the milling step comprises reducing the particle size of the powdered food product and added fat to a particle size of 30 - 120 microns (µm). Further optionally, the reducing step comprises reducing the particle size of the powdered food product and added fat to a particle size of 30 - 110 microns, optionally 30 - 100 microns, optionally 30 - 90 microns, optionally 30 - 80 microns, optionally 30 - 70 microns, optionally 30 - 60 microns, optionally 30 - 50 microns, optionally 30 - 40 microns, optionally 30 - 35 microns, optionally 35 microns.

Optionally or additionally, the food stock has a particle size of less than 120 microns (µm). Further optionally, the food stock has a particle size of less than 110 microns, optionally less than 100 microns, optionally less than 90 microns, optionally less than 80 microns, optionally less than 70 microns, optionally less than 60 microns, optionally less than 50 microns, optionally less than 40 microns, optionally less than 35 microns, optionally less than 30 microns.

Optionally or additionally, the food stock has a particle size of 30 - 120 microns (µm). Further optionally, the food stock has a particle size of 30 - 110 microns, optionally 30 - 100 microns, optionally 30 - 90 microns, optionally 30 - 80 microns, optionally 30 - 70 microns, optionally 30 - 60 microns, optionally 30 - 50 microns, optionally 30 - 40 microns, optionally 30 - 35 microns, optionally 35 microns.

According to a fifth aspect of the present invention there is provided a method for preparing a food broth, the method comprising the steps of
(a) providing a powdered food product;
(b) providing a solvent; and
(c) infusing the powdered food product in the solvent.

Optionally, the powdered food product is obtainable by a method comprising the steps of: cooking a food source; dehydrating the cooked food source; and reducing the particle size of the dehydrated food source.

Optionally, the powdered food product is obtained by a method comprising the steps of: cooking a food source; dehydrating the cooked food source; and reducing the particle size of the dehydrated food source.

Optionally, the powdered food product is obtainable by a method according to a first aspect of the present invention.

Optionally, the powdered food product is obtained by a method according to a first aspect of the present invention.

According to a sixth aspect of the present invention there is provided a food broth obtainable by a method comprising providing a powdered food product; providing a solvent; and infusing the powdered food product in the solvent.

Optionally, the food broth is obtained by a method comprising providing a powdered food product; providing a solvent; and infusing the powdered food product in the solvent.

Optionally, the solvent is an aqueous solvent.

Optionally, the solvent is water.

Further optionally, the solvent is heated water.

Alternatively, the solvent is an oil, fat, lipid, or any combination each thereof.

Further alternatively, the solvent is a heated oil, fat, lipid, or any combination each thereof.

Optionally, the solvent is an oil, fat, lipid, or any combination each thereof, heated up to 120°C. Further optionally, the solvent is an oil, fat, lipid, or any combination each thereof, heated up to 120°C for up to 3 hours.

Alternatively, the solvent is an oil, fat, lipid, or any combination each thereof, heated up to 180°C. Further alternatively, the solvent is an oil, fat, lipid, or any combination each thereof, heated up to 180°C for up to 30 minutes.

Optionally, the solvent is a plant fat.

Optionally, the solvent is a plant oil. Further optionally, the solvent is a plant oil selected from coconut oil, corn oil, cottonseed oil, olive oil, palm oil, peanut oil, ground nut oil, rapeseed oil, canola oil, safflower oil, sesame oil, soybean oil, sunflower oil, almond oil, beech nut oil, brazil nut oil, cashew oil, hazelnut oil, macadamia oil, mongongo nut oil, manketti oil, pecan oil, pine nut oil, pistachio oil, walnut oil, or any combination each thereof.

Optionally or additionally, the solvent is an animal fat/oil.

Optionally, the solvent is an animal fat/oil.

Further optionally, the solvent is an animal fat/oil selected from alpaca fat/oil, banteng fat/oil, bison fat/oil, camel fat/oil, beef fat/oil, veal fat/oil, venison fat/oil, gayal fat/oil, horse fat/oil, pork fat/oil, poultry fat/oil, rabbit fat/oil, deer fat/oil, mutton fat/oil, lamb fat/oil, goat fat/oil, fish fat/oil, and any combinations each thereof.

Optionally or additionally, the solvent is an animal fat/oil selected from chicken fat/oil, quail fat/oil, turkey fat/oil, goose fat/oil, duck fat/oil, guinea fowl fat/oil, squab fat/oil, and any combinations each thereof.

The animal fat/oil can be rendered or not rendered. Optionally, the animal fat/oil is rendered.

Optionally, the powdered food product is added in an amount of at least 10% (w/w) of the solvent. Further optionally, the powdered food product is added in an amount of at least 20%, optionally at least 30%, optionally at least 40%, optionally at least 50%, optionally at least 60%, optionally at least 70%, optionally at least 80%, optionally at least 90%, optionally at least 100% (w/w) of the solvent.

Optionally, the infusing step comprises contacting the powdered food product with the solvent. Further optionally, the infusing step comprises contacting the powdered food product with the water. Still further optionally, the infusing step comprises contacting the powdered food product with the heated water.

Optionally, the method comprises the additional step of removing the powdered food product from the solvent, optionally the water, optionally the heated water.

Optionally, the method comprises the additional step of straining, filtering and/or sieving the powdered food product from the solvent, optionally the water, optionally the heated water.

According to a seventh aspect of the present invention there is provided a device for preparing a food broth, the device comprising:
(a) a powdered food product; and
(b) a porous membrane encapsulating the powdered food product.

Optionally, the powdered food product is obtainable by a method comprising the steps of: cooking a food source; dehydrating the cooked food source; and reducing the particle size of the dehydrated food source.

Optionally, the powdered food product is obtained by a method comprising the steps of: cooking a food source; dehydrating the cooked food source; and reducing the particle size of the dehydrated food source.

Optionally, the powdered food product is obtainable by a method according to a first aspect of the present invention.

Optionally, the powdered food product is obtained by a method according to a first aspect of the present invention.

Optionally, the porous membrane is a fluid permeable membrane.

Further optionally, the porous membrane is a liquid permeable membrane.

Optionally, the porous membrane is a liquid permeable membrane formed from paper or nylon.

Further optionally, the porous membrane is a liquid permeable membrane formed from paper or paper pulp.

Still further optionally, the porous membrane is a liquid permeable membrane formed from paper pulp selected from softwood, hardwood, fiber crops, mineral fibers, or any combination each thereof.

Optionally, the porous membrane is formed from filter paper.

Optionally, the porous membrane is formed from filter paper having pores of at least 5 microns. Further optionally, the porous membrane is formed from filter paper having pores of at least 10 microns, optionally at least 15 microns, optionally at least 20 microns, optionally at least 25 microns.

According to a eighth aspect of the present invention there is provided a method for preparing a food broth, the method comprising the steps of
(a) providing a food stock;
(b) providing a solvent; and
(c) dissolving the powdered food product in the solvent.

Optionally, the food stock is obtainable by a method comprising the steps of: providing a powdered food product; and adding fat to the powdered food product.

Optionally, the food stock is obtainable by a method comprising the steps of: cooking a food source; dehydrating the cooked food source; reducing the particle size of the dehydrated food source; and adding fat to the powdered food product.

Optionally, the food stock is obtained by a method comprising the steps of: providing a powdered food product; and adding fat to the powdered food product.

Optionally, the food stock is obtained by a method comprising the steps of: cooking a food source; dehydrating the cooked food source; reducing the particle size of the dehydrated food source; and adding fat to the powdered food product.

Optionally, the food stock is obtainable by a method according to a third aspect of the present invention.

Optionally, the food stock is obtained by a method according to a third aspect of the present invention.

According to a ninth aspect of the present invention there is provided a food broth obtainable by a method comprising providing a food stock product; providing a solvent; and dissolving the food stock in the solvent.

Optionally, the food broth is obtained by a method comprising providing a food stock product; providing a solvent; and dissolving the food stock in the solvent.

Optionally, the solvent is an aqueous solvent.

Optionally, the solvent is water.

Further optionally, the solvent is heated water.

Optionally, the dissolving step comprises contacting the food stock with the solvent. Further optionally, the dissolving step comprises contacting the food stock with the water. Still further optionally, the dissolving step comprises contacting the food stock with the heated water.

### Brief Description of the Drawings

Embodiments of the present invention will now be described with reference to the accompanying drawings in which:
**Figure 1** is a graph illustrating the effect of the dehydrating step of a method according to a first aspect of the present invention;

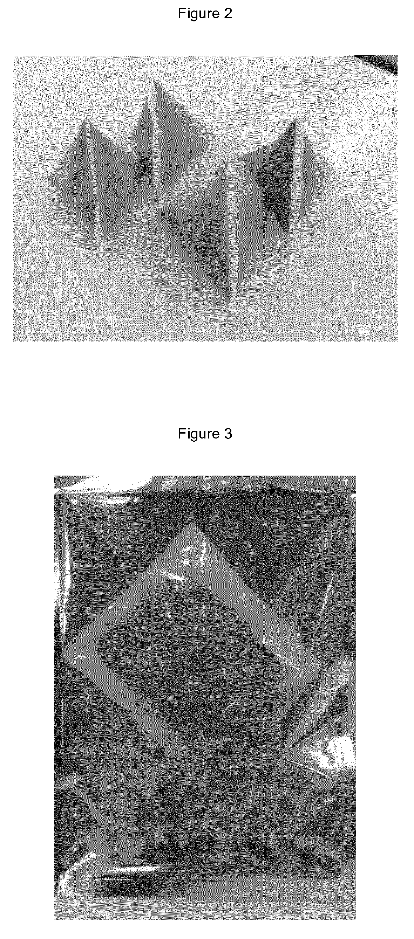

**Figure 2** is a photograph depicting a device according to a seventh aspect of the present invention; and
**Figure 3** is a photograph depicting preparing a food broth according to a fifth aspect of the present invention.

### Examples

Embodiments of the present invention will now be described with reference to the following nonlimiting examples:

### Example 1

### Preparing a powdered food product

All culinary ingredients were commercially sourced from traditional (high street) grocery stores or supermarkets, unless otherwise indicated.

1.4 kg of raw chicken carcass (back and chest cavity) was commercially sourced and placed in an oven tray and roasted in an oven (Rational CombiMaster Plus, Model CMP 61, 11.0 kW) for 40 minutes at 180°C. The cooked bones were removed and minced through a 6 millimetre mincer plate (Trespade, 22 EL Plus, 1.0 kW). The minced cooked bones were seasoned with 11.5g of a seasoning mixture per 1 kg bones and returned to the oven. The seasoning mixture comprised 2g onion, 1.5g garlic powder, 1g thyme, 1g organum, 1g white pepper, and 5g salt. The seasoned bones were further cooked for a further 30 minutes at 140°C and yielded 0.5 kg of dehydrated bones. The dehydrated bones were transferred to a kitchen bowl chopper (RobotCoupe, R4 1500, 4.5L) and reduced in particle size until the powdered food product had a particle size of less than 3 mm, as measured using a particle size analyser (Grindometer - Elcometer 2020M002 202013120075) in accordance with the manufacturer's instructions. In short, the particle size analyser and a scraper were heated to a temperature between 40-45°C in an incubator, after washing, and a small sample of the test material was poured into a test channel of the particle size analyser. The scraper blade was scraped at a steady rate down the length of the test channel with sufficient downward pressure to clean the level surface of a gauge at the test channel but leaving the test channel filled with material to be tested. The particle size is determined by observing the point along the gauge where the material first shows a predominantly speckled appearance and noting graduation marks between which the number of particles, in a band 3mm wide across the test channel, is in the order of 5-10. The higher graduation figure is noted as particle size. The powdered food product is stored in a cool, dry environment, in an airtight container.

In a comparative test, 1.4 kg of raw chicken carcass (back and chest cavity) was commercially sourced as above and placed in an oven tray and roasted in an industrial double-door roasting oven (Double D RevoRack) for 90 minutes at 200°C. The cooked bones were removed and minced through a 6 millimetre mincer plate as above. The minced cooked bones were seasoned as above and placed into an oven (Rational CombiMaster Plus, Model CMP 61, 11.0 kW) for a further 30 minutes at 140°C, yieldeding 0.5 kg of dehydrated bones. The dried bones were transferred to a kitchen bowl chopper and reduced in particle size as above.

The moisture content and water activity of the powdered food product of the invention were each assessed using a moisture analyser (Mettler Toledo, HG63 Halogen) in accordance with the manufacturer's instructions. In short, an empty sample pan was placed in the sample pan handler of the sample chamber, ensuring the tongue of the pan handler fits in the slot of the draft shield element, and the balance installed in the moisture analyzer is set to zero. A small sample of the test material was placed in the sample pan, and the moisture analyser dried and measured the moisture content of the sample.

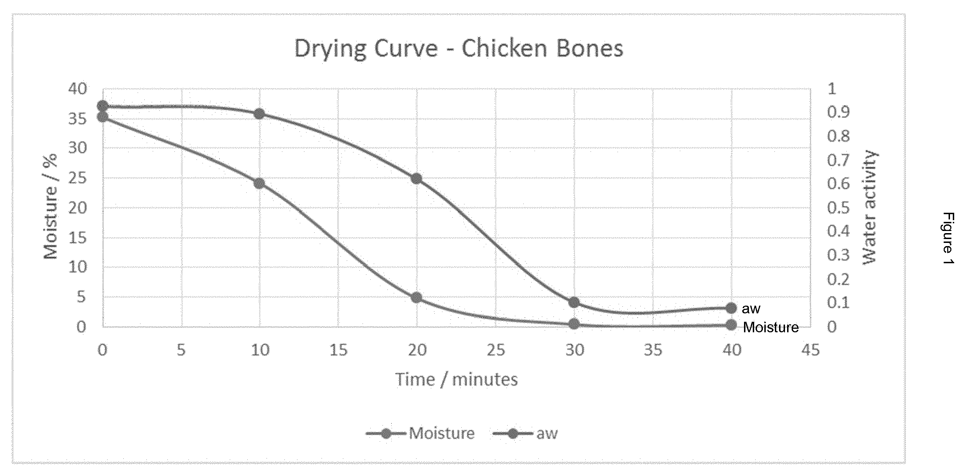

The drying curve of Figure 1 illustrates the effect of dehydrating the cooked food source, which facilitates the step of reducing the particle size of the dehydrated food source, which would otherwise be difficult due to the high moisture content. Without being bound by theory, it is thought that the rate at which the dehydrating step proceeds is less consequential to the method than the moisture content of the food source, which should preferably be less than 25% (relative dry weight of the cooked food source).

To assess microbiological stability, a 50g sample of the powdered food product of the invention was stored at typical ambient conditions (25°C, 40% RH), and monitored by an independent lab according to SANS 18593:2004 for microbiological growth of total viable organisms (plate count). After 8 weeks at this temperature and relative humidity, no growth was observed (<10 cfu/g).

### Example 2

### Preparing a food stock

A powdered food product was prepared as described in Example 1. 0.4 kg of the powdered food product was mixed with 0.4 kg of rendered chicken fat and dissolved in a 1 L stainless steel vessel using a laboratory dissolver (Dispermill Vango 100 - ATP Engineering) at 6 m/s for 30 minutes. The dissolver adaptor was then replaced with a basket mill attachment (Vango 100 Micromill), and the mixture was milled at 2500 rpm (7.8 m/s) for 5 hours, or until a particle size of less than 30 µm was attained. The resultant food stock was stored in cool, dry conditions in an air-tight container.

To assess microbiological stability, a 50g sample of the food stock of the invention was placed in an incubator (Shel Lab, General Purpose Incubator) at 38°C, 40% RH, and monitored by an independent lab according to SANS 18593:2004 for microbiological growth of total viable organisms (plate count). After 8 weeks at this temperature and relative humidity, no growth was observed (<10 cfu/g).

The moisture content and water activity were assessed as described above and were determined to be 0.65% and 0.30 respectively.

The food stock of the invention can be used to prepare a pressed stock cube using the following mixture, which was combined in a stainless steel vessel, warmed to 60°C in a conventional oven, and pressed into a cube using a hand held moulding tool:

**Table 1**

| **Raw Material** | **Quantity (g)** |
|---|---|
| Food Stock | 20.7 |
| Sage | 0.1 |
| Rosemary | 0.4 |
| Thyme | 0.1 |
| Turmeric powder | 0.1 |
| Garlic powder | 1.5 |
| Onion powder | 1.0 |
| Pepper, white | 0.1 |
| Celery powder | 0.3 |
| Parsley flakes | 0.1 |
| Paprika OR | 0.1 |
| Salt | 63.4 |
| Yeast Extract | 4.8 |
| Emulsifier | 2.1 |
| Sugar | 5.2 |
| Total | 100.0 |

### Example 3

### Preparing a food broth and a device for preparing same

A powdered food product was prepared as described in Example 1, and which can be used to produce a food broth for either direct consumption or for culinary purposes (for example as the base of stews, soups, sauces, etc,) by the addition of boiling water. Because the powdered bones are still of a size that cannot be consumed directly, a device was used to retain the bones during the infusing step. A porous material, such as that used for teabags, is suitable for aqueous extraction with boiling water, and was commercially sourced. 15g of the following mixture was placed in a 9x9cm tetrahedral-shaped bag made from the porous material and sealed using a bar heat sealer, and stored in a cool, dry environment.

**Table 2**

| **Raw Material** | **Quantity (g)** |
|---|---|
| Powdered food product | 62.3 |
| Sage | 0.1 |
| Rosemary powder | 0.6 |
| Thyme powder | 0.2 |
| Turmeric powder | 0.1 |
| Garlic powder | 2.0 |
| Onion powder | 1.3 |
| White pepper powder | 0.1 |
| Celery powder | 0.4 |
| Parsley flakes | 0.1 |
| Paprika oleoresin | 0.03 |
| Salt | 16.5 |
| Yeast Extract | 8.4 |
| Sugar | 7.9 |
| Total | 100.0 |

The bag was placed in a glass measuring jug, and 400ml of boiling water was added. The powdered food product was allowed to infuse into the water over a period of 5 minutes. The bag was removed and the food broth was used as required.

As a comparative test, 7.2g of the mixture defined in Table 2 was placed in a in a quadrilateral-shaped bag made from the porous material and placed in a foil sachet. 4.0g of instant wheat noodles and 0.75g of dried chives were added to the sachet. The sachet was sealed using a bar heat sealer and stored in a cool, dry environment. The entire contents of the sachet were emptied into a cup containing 200ml of boiling water. The powdered food product was allowed to infuse over a 5 minute period, after which the quadrilateral-shaped bag was removed and the food broth was consumed immediately.

### Example 4

### Yield from powdered food product and food stock of the invention

In order to determine the effective strength of the food broth and food stock obtainable from the methods of the invention, as a comparative test, a traditional broth/stock was prepared by an executive chef using 1.0kg of chicken bones and 3L of water added to a commercially available pressure cooker and simmered on a stove-top for 5 hours.

These three stocks were compared using a trained panel of R&D scientists. The traditional broth/stock was was used as a reference standard, and the amount of powdered food product and food stock was increased incrementally under subjective tasting by the trained panel of R&D scientists until the strength of flavour of the three stocks was determined to be the same.

5.0g of the powdered food product of the invention was added to 200ml of boiling water and allowed to infuse for 5 minutes.

1.0g of the food stock of the invention was added to 200ml of boiling water and allowed to dissolve for 5 minutes.

Based on these amounts, it was determined the amount of bones that are required to produce 5.0g of the powdered food product of the invention and 1.0g of the food stock of the invention; and thus the amount of bones that are required to achieve a 200ml stock having the same strength of flavour.

**Table 3**

| **Stock** | **Dosage** | **Chicken bone equivalent*** |
|---|---|---|
| Chicken stock (chef made, without reduction) | 200ml, as-is | 66g |
| Powdered food product | 5.0g/200ml | 5.0g |
| Food stock | 1.0g/200ml | 0.5g |

| | | |
|---|---|---|
| * The amount of meat bone required to produce the indicated amount of meat stock. | | |

### Example 5

### Direct comparison of a food stock of the invention with market equivalents

In order to evaluate the food stock of the invention against traditional market products, two stock cube formulations were developed, each of which is based on the market-leading products in all respects, except the source of chicken flavour. This was done for two different markets, namely the South African and Irish markets. In short, a pressed stock cube was prepared from a food stock of the present invention as described in Example 2, based on the ingredients of the traditional market products, but using the food stock of the invention in place of the source of chicken flavour in the traditional market products

The pressed stock cubes were each dissolved in water (10g per 500ml) and were assessed by consumer panels (22 independent consumers in the South African panel and 18 consumers in the Irish panel), on the basis of; preference (ranking), acceptability (score out of 10), authenticity (score out of 100%) and perception of product value (score out of 100%).

The following results were obtained:

**Table 4**

| | **Sample Product (South Africa)** | **Market Leading Product (South Africa)** | **Sample Product (Ireland)** | **Market Leading Product (Ireland)** |
|---|---|---|---|---|
| **Preference** | Preferred | - | Preferred | - |
| **Acceptability** | 6.9 | 4.6 | 8.2 | 6.2 |
| **Flavour Authenticity** | 68% | 32% | 65% | 35% |
| **Perception of product value** | 55% | 9% | 60% | 30% |

Accordingly, the present invention provides methods for preparing a powdered food product and food stocks for use in the culinary field, and which display improved properties compared to traditionally prepared broths/stocks in terms of microbiological shelf-life and yield. The food stocks of the present invention display improved microbiological shelf-life properties compared to traditional meat stocks. The food stocks of the present invention, incubated at 38°C for 8 weeks, showed no sign of microbiological growth, whereas traditional meat stocks need to be frozen to achieve this shelf-life. It is also evident that both the powdered food product and food stock of the present invention are much higher yielding based on the amount of meat bone required to produce a standard volume of traditional meat stock.

## Claims

1. A method for preparing a powdered food product, the method comprising the steps of:
(a) cooking a food source;
(b) dehydrating the cooked food source; and
(c) reducing the particle size of the dehydrated food source.

2. A method according to Claim 1, wherein the cooking step comprises heating the food source to at least 150°C.

3. A method according to Claim 1 or 2, wherein the food source is a meat source and the meat source comprises meat and bones.

4. A method according to any one of Claims 1-3, wherein the dehydrating step comprises dehydrating the food source to a moisture content of less than 25% relative dry weight of the cooked food source.

5. A method according to any one of Claims 1-4, wherein the dehydrating step comprises dehydrating the food source to a water activity (a_{w}) of less than 0.9.

6. A method according to any one of Claims 1-5, wherein the reducing step comprises reducing the particle size of the dehydrated food source to a particle size of less than 10mm.

7. A method according to any one of Claims 1-6, wherein the method further comprises the steps of separating the meat from the cooked food source; dehydrating the cooked meat; and reducing the particle size of the dehydrated meat.

8. A method according to any one of Claims 1-6, wherein the method further comprises the steps of separating the bones from the cooked food source; dehydrating the cooked bones; and reducing the particle size of the dehydrated bones.

9. A method for preparing a food stock, the method comprising the steps of:
(a) providing a powdered food product directly obtained from a method according to any one of Claims 1-8; and
(b) adding fat to the powdered food product.

10. A method according to Claim 9, wherein the fat is added in an amount of at least 10% (w/w) of the powdered food product.

11. A method according to Claim 9, wherein the fat is added in an amount of at least 100% (w/w) of the powdered food product.

12. A method according to any one of Claims 9-11, wherein the method comprises the additional step of reducing the particle size of the powdered food product and added fat to a particle size of 30 - 120 microns (µm).

13. A method for preparing a food broth, the method comprising the steps of:
(a) providing a powdered food product directly obtained from a method according to any one of Claims 1-8;
(b) providing a solvent; and
(c) infusing the powdered food product in the solvent.

14. A device for preparing a food broth, the device comprising:
(a) a powdered food product directly obtained from a method according to any one of Claims 1-8; and
(b) a porous membrane encapsulating the powdered food product.
